# EUROPEAN PATENT SPECIFICATION

(11) **EP 4 480 567 B1**
(45) Date of publication and mention of the grant of the patent: **14.01.2026**
(21) Application number: 24176601.3
(22) Date of filing: 17.05.2024
(51) Int. Cl.: B01D 53/04, B01D 53/26, H01M 10/052, H01M 10/42

(54) **GAS-PHASE HAZARDOUS SUBSTANCE TREATMENT MEMBER AND PREPARATION METHOD, ENERGY STORAGE DEVICE AND ELECTRICAL EQUIPMENT**
ELEMENT ZUR BEHANDLUNG VON GASFÖRMIGEN GEFAHRSTOFFEN UND HERSTELLUNGSVERFAHREN, ENERGIESPEICHERVORRICHTUNG UND ELEKTRISCHE AUSRÜSTUNG
ÉLÉMENT DE TRAITEMENT DE SUBSTANCE DANGEREUSE EN PHASE GAZEUSE ET PROCÉDÉ DE PRÉPARATION, DISPOSITIF DE STOCKAGE D'ÉNERGIE ET ÉQUIPEMENT ÉLECTRIQUE

(30) Priority: 05.06.2023 CN 202310657038
(43) Date of publication of application: 25.12.2024
(73) Proprietor: Hithium Tech HK Limited, Hong Kong (HK)
(72) Inventor: Li, Qi, Xiamen, 361100 (CN)
(74) Representative: RGTH

(56) References cited:
- WO-A1-2015/101857
- WO-A1-2021/023197
- US-A1- 2020 020 993

## Description

### TECHNICAL FIELD

The present application relates to the field of energy storage technology, and in particular, to a gas-phase hazardous substance treatment member and preparation method, an energy storage device, and an electrical equipment.

### BACKGROUND

Secondary battery, also known as a rechargeable battery or a storage battery, refers to a battery that can continue to be used by activating the active substance by means of charging after the battery is discharged. The recyclable characteristics of the secondary batteries make them gradually become the main power source of the electrical equipment. With the gradual increase in the demand for the secondary batteries, people have higher and higher performance requirements for various aspects of the second batteries, especially for the battery life requirements. The stability of the internal environment of the battery is an important parameter for ensuring long service life of the battery, especially the pressure value inside the battery is a key factor affecting the service life of the battery. If the pressure inside the battery is too high, it will easily cause the battery to bulge and cause the active substance adhered to the plate of the winding-type electrode assembly inside the battery to fall off; if the pressure inside the battery increases to a critical value, it will trigger the explosion-proof valve set for safety to explode and open, causing the secondary battery to fail.

In the related art, the secondary battery usually consists of a cover assembly, an electrode assembly and a case. The actual production process is to make the top lid, the electrode assembly and the case, respectively, then use a metal adapter to weld a pole post of the cover assembly and a tab of the electrode assembly, and then put the electrode assembly into the case, and then use the top lid to cap the opening of the case and then weld them for sealing, so as to form the basic structure of the secondary battery. Afterwards, the electrolyte is injected manually through the injection hole set in the top lid, and the injection hole is welded and sealed after completion of the injection.

Documents US2020/020993 A1, WO 2021/023197 A1 and WO2015/101857 A1 disclose devices for capturing of hazardous substances inside a battery. All devices of said documents comprise a getter material inside a breathable outer layer.

### SUMMARY

According to an aspect of the present application, there is provided a gas-phase hazardous substance treatment member. The gas-phase hazardous substance treatment member comprises: a first particle layer, a second particle layer, and a breathable cushion. The first particle layer comprises metal or alloy containing particles, the metal or alloy containing particles being used for treating at least one of hazardous gases generated by an energy storage device. The second particle layer wraps the first particle layer and comprises carbonaceous particles, the carbonaceous particles being used for treating at least one of the hazardous gases. The breathable cushion is disposed on both sides of the second particle layer along a thickness direction thereof.

According to an aspect of the present application, a preparation method of a gas-phase hazardous substance treatment member, for preparing the gas-phase hazardous substance treatment member described in the above aspect, is provided. The method comprises:
step 1. providing a chimney-shaped first mould and placing it on a carrier plate, the first mould and a surface of the carrier plate forming a first mould cavity with an opening;
step 2, making a first breathable cushion and placing the first breathable cushion at a bottom of the first mould cavity through the opening of the first mould cavity;
step 3, filling the first mould cavity with carbonaceous particles and compacting the carbonaceous particles to obtain a first sub-particle layer disposed on the first breathable cushion;
step 4, providing a chimney-shaped second mould and placing it on the first sub-particle layer, the second mould and the first sub-particle layer forming a second mould cavity with an opening;
step 5, filling the second mould cavity with metal or alloy containing particles through the opening of the second mould cavity, and compacting the metal or alloy containing particles to obtain a first particle layer disposed on the first sub-particle layer;
step 6, removing the second mould and continuing to fill the first mould cavity with the carbonaceous particles through the opening of the first mould cavity, and compacting the carbonaceous particles to obtain a second sub-particle layer, the first sub-particle layer and the second sub-particle layer constituting a second particle layer wrapping the first particle layer;
step 7, making a second breathable cushion and placing the second breathable cushion into the first mould cavity through the opening of the first mould cavity to cover the second sub-particle layer;
step 8, removing the first mould to obtain a sandwich-structured treatment member and use it as the gas-phase hazardous substance treatment member.

According to an aspect of the present application, there is provided an energy storage device. The energy storage device comprises: a housing, an electrode assembly, a top lid, and the gas-phase hazardous substance treatment member according to any one of the above aspects. The housing comprises an accommodation cavity having an opening. The electrode assembly is accommodated within the accommodation cavity. The top lid seals the opening of the accommodation cavity. The gas-phase hazardous substance treatment member according to any one of the above aspects is disposed within the accommodation cavity and for treating hazardous gases within the accommodation cavity.

According to an aspect of the present application, an electrical equipment is provided. The electrical equipment comprises an energy storage device as described in the above-mentioned aspect. The energy storage device supplies power to the electrical equipment.

It may be understood that the above general description and the following detailed description are only exemplary and explanatory, and do not limit the present application.

### BRIEF DESCRIPTION OF THE DRAWINGS

The foregoing and other features and advantages of the present application will become more apparent by describing in detail exemplary implementations thereof with reference to the accompanying drawings.
FIG. 1 is a schematic diagram of a cross-sectional structure of an energy storage device illustrated according to an exemplary implementation.
FIG. 2 is a schematic diagram of a cross-sectional structure of a gas-phase hazardous substance treatment member illustrated according to an exemplary implementation.
FIG. 3 is a schematic diagram of a cross-sectional structure of another gas-phase hazardous substance treatment member according to an exemplary implementation.
FIG. 4 is a schematic diagram of a cross-sectional structure of yet another gas-phase hazardous substance treatment member according to an exemplary implementation.
FIG. 5 is a schematic diagram of a cross-sectional structure of yet another gas-phase hazardous substance treatment member according to an exemplary implementation.
FIG. 6 is a schematic diagram of a cross-sectional structure of yet another gas-phase hazardous substance treatment member according to an exemplary implementation.
FIG. 7 is a schematic diagram of a cross-sectional structure of yet another gas-phase hazardous substance treatment member according to an exemplary implementation.
FIG. 8 is a schematic diagram of a cross-sectional structure of yet another gas-phase hazardous substance treatment member according to an exemplary embodiment.
FIG. 9 is a schematic diagram of a cross-sectional implementation of yet another gas-phase hazardous substance treatment member according to an exemplary embodiment.
FIG. 10 is a flow chart of a preparation method of a gas-phase hazardous substance treatment member according to an exemplary implementation.
FIG. 11 is a schematic diagram of a cross-sectional structure after forming a first breathable cushion in a preparation process of a gas-phase hazardous substance treatment member according to an exemplary implementation.
FIG. 12 is a schematic diagram of a cross-sectional structure after forming a first sub-particle layer in a preparation process of a gas-phase hazardous substance treatment member according to an exemplary implementation.
FIG. 13 is a schematic diagram of a cross-sectional structure after forming a first particle layer in a preparation process of a gas-phase hazardous substance treatment member according to an exemplary implementation.
FIG. 14 is a schematic diagram of a cross-sectional structure after removing a second mould in a preparation process of a gas-phase hazardous substance treatment member according to an exemplary implementation.
FIG. 15 is a schematic diagram of a cross-sectional structure after forming a second sub-particle layer in a preparation process of a gas-phase hazardous substance treatment member according to an exemplary implementation.
FIG. 16 is a schematic diagram of a cross-sectional structure after forming a second breathable cushion in a preparation process of a gas-phase hazardous substance treatment member according to an exemplary implementation.
FIG. 17 is a schematic diagram of a cross-sectional structure after forming a third sub-particle layer in a preparation process of another gas-phase hazardous substance treatment member according to an exemplary implementation.
FIG. 18 is a schematic diagram of a cross-sectional structure after placing a second mould and forming a first particle layer in a preparation process of another gas-phase hazardous substance treatment member according to an exemplary implementation.
FIG. 19 is a schematic diagram of a cross-sectional structure after removing the second mould in a preparation process of another gas-phase hazardous substance treatment member according to an exemplary implementation.
FIG. 20 is a schematic diagram of a cross-sectional structure after forming a fourth sub-particle layer in a preparation process of another gas-phase hazardous substance treatment member according to an exemplary implementation.
FIG. 21 is a schematic diagram of a cross-sectional structure after removing a third mould in a preparation process of another gas-phase hazardous substance treatment member according to an exemplary implementation.
FIG. 22 is a schematic diagram of a cross-sectional structure after forming a second sub-particle layer in a preparation process of another gas-phase hazardous substance treatment member according to an exemplary implementation.

Explanation of reference signs:
100, Energy storage device; 200, Carrier plate; 300, First mould; 400, Second mould; 500, Third mould;
310, First mould cavity; 410, Second mould cavity; 510, Third mould cavity;
10, Case; 20, Electrode assembly; 30, Top lid; 40, Gas-phase hazardous substance treatment member;
11, Accommodation cavity; 31, Cover plate; 32, Electrode terminal;
41, First particle layer; 42, Second particle layer; 43, Breathable cushion; 44, Tension member; 45, Housing; 46, Cladding layer; 47, Third particle layer;
42a, First sub-particle layer; 42b, Second sub-particle layer; 47a, Third sub-particle layer; 47b, Fourth sub-particle layer;
451, Bottom plate; 452, Top plate; 453, Side plate; 454, Baffle; 455, Cavity; 456, Breathing hole.

### DETAILED DESCRIPTION

Example implementations will now be described more fully with reference to the accompanying drawings. However, the example implementations may be implemented in various forms and may not be construed as being limited to the implementations set forth herein; rather, these implementations are provided so that the present application will be thorough and complete, and will fully convey the concepts of the example implementations to those skilled in the art. The same reference signs in the drawings denote the same or similar structures, and thus their detailed descriptions will be omitted.

The implementations in the present application provides an energy storage device, which can be, but is not limited to, a single cell battery, a battery module, a battery pack, a battery system, etc. For the single cell battery, it can be a lithium-ion secondary battery, a lithium sulfur battery, a sodium lithium ion battery, a sodium ion battery, a magnesium ion battery, etc., and the single cell battery can be cylindrical, flat, rectangular, etc., and the implementations of the present application are not limited thereto.

In the process of recycling of the secondary battery, hazardous gases will be generated due to various reasons such as decomposition of the electrolyte, excessive moisture in the case and the like, resulting in the deterioration of the cycle life and multiplier performance; and with the increase of hazardous gases in the case, it is also easy to lead to excessive free active ions on the surface of the plate of the electrode assembly, which will form dendritic crystals over time, and when the dendritic crystals grow to a certain length, it is easy to puncture the separator, resulting in the internal short circuit of the secondary battery, which greatly reduces the safety performance.

Hereinafter, the energy storage device is explained in detail by taking a single cell battery as the example of the energy storage device.

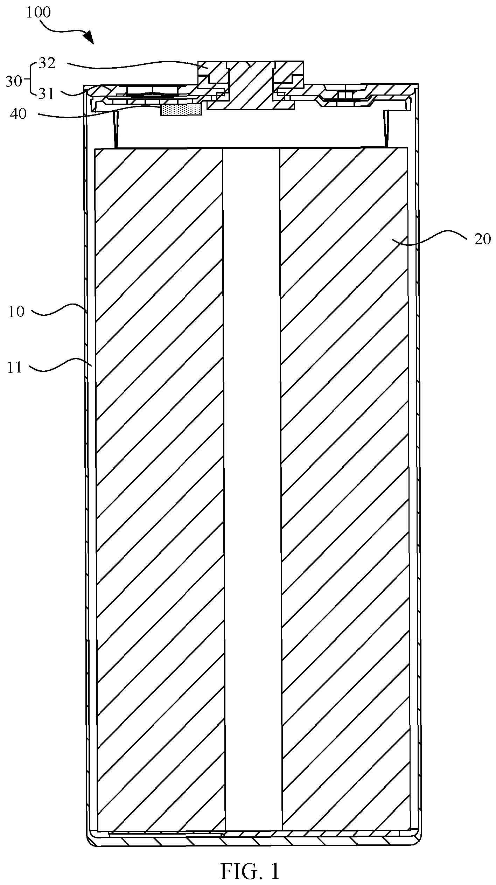

FIG. 1 exemplifies a schematic structure of an energy storage device 100 provided by an embodiment of the present application. As shown in FIG. 1, the energy storage device 100 comprises a case 10, an electrode assembly 20, and a top lid 30, the case 10 comprises an accommodation cavity 11 having an opening; the electrode assembly 20 is accommodated in the accommodation cavity; and the top lid 30 seals the opening of the accommodation cavity 11.

The case 10 may be a chimney-shaped structure with an opening at one end, and the energy storage device 100 comprises one top lid 30 to be able to seal the opening of the case 10; the case 10 may also be a chimney-shaped structure with two openings at both ends, and the energy storage device 100 comprises one top lid 30 and one end cap, or comprises two top lids 30, so as to be able to seal the two openings of the case 10 respectively.

The top lid 30 comprises a cover plate 31 and an electrode terminal 32, the cover plate 31 is provided with an explosion-proof valve and/or a liquid filling hole (i.e., an explosion-proof valve, a liquid filling hole, or an explosion-proof valve and a liquid filling hole), the electrode terminal 32 is threaded through the cover plate 31, with one end being connected to one electrode assembly 20, and the other end being exposed outside of the case 10 to serve as one output end of the battery; the explosion-proof valve is used to externally discharge the hazardous gases inside the accommodation cavity 11 to improve the safety of the use of the energy storage device 100, and the liquid filling hole is used to inject the electrolyte into the accommodation cavity 11 of the energy storage device 100.

The electrode assembly 20 comprises a positive plate, a negative plate, and a separator provided in a stacked way, the separator is disposed between the positive plate and the negative plate, and the positive plate and the negative plate have tabs at the ends thereof to form a positive tab and a negative tab of the energy storage device 100. The positive tab and the negative tab may be disposed at the same end of the electrode assembly 20, or may be disposed at different ends of the electrode assembly 20. When the positive tab and the negative tab are disposed at the same end of the electrode assembly 20, the positive tab and the negative tab are connected to the positive terminal and the negative terminal comprised in the top lid 30, respectively, so as to achieve the output of the electric energy of the electrode assembly 20 through the positive terminal and the negative terminal; when the positive tab and the negative tab are disposed at two ends of the electrode assembly 20, one of the positive tab and the negative tab is connected to the electrode terminal 32 comprised in the top lid 30, and the other is connected to the bottom of the case 10 or to the electrode terminal 32 comprised in the other top lid 30, so as to realize the output of the electrical energy of the electrode assembly 20 through the electrode terminal 32 of the top lid 30 and the bottom of the case 10 or through the electrode terminals 32 of the two top lids 30.

It is to be noted that the energy storage device 100 further comprises a connector, and the connection between one tab of the electrode assembly 20 and one electrode terminal 32 of the battery cover plate 31 can be realized via the connector, to ensure the stability of the connection between the electrode assembly 20 and the electrode terminal 32.

During the use of the energy storage device 100, hazardous gases may be generated inside the energy storage device 100, and the aggregation of the hazardous gases in the accommodation cavity 11 of the case 10 is likely to cause excessive pressure and thus cause bulging of the energy storage device 100, and if the pressure increases to a critical value, the explosion-proof valve of the energy storage device 100 will be triggered, rendering the energy storage device 100 ineffective. In addition, the hazardous gases generated by the energy storage device 100 will easily cause the cycle life and multiplier performance of the energy storage device 100 to deteriorate, and with the increase of the hazardous gases, it is also easy to cause too many free lithium ions on the surface of the plate of the electrode assembly 20, which will lead to a short circuit inside the energy storage device 100, and the safety performance will be greatly reduced.

For this reason, the present application proposes a gas-phase hazardous substance treatment member 40, as shown in FIG. 1, the gas-phase hazardous substance treatment member 40 may be disposed within the accommodation cavity 11 of the case 10, for example, fixed to the inner surface of the top lid 30. That is, the energy storage device 100 also comprises the gas-phase hazardous substance treatment member 40, so that by treating the hazardous gas in the accommodation cavity 11 by the gas-phase hazardous substance treatment member 40, the bulging of the energy storage device 100 is avoided, and at the same time, the deterioration of the cycling life and the multiplier performance of the energy storage device 100 is reduced.

In the present application, the treatment of the hazardous gas by the gas-phase hazardous substance treatment member 40 involved comprises physical adsorption of the hazardous gas and/or chemical reaction of the hazardous gas (i.e., physical adsorption of the hazardous gas, chemical reaction of the hazardous gas, or physical adsorption of the hazardous gas and chemical reaction of the hazardous gas).

The gas-phase hazardous substance treatment member 40 involved in the present application is next explained in detail.

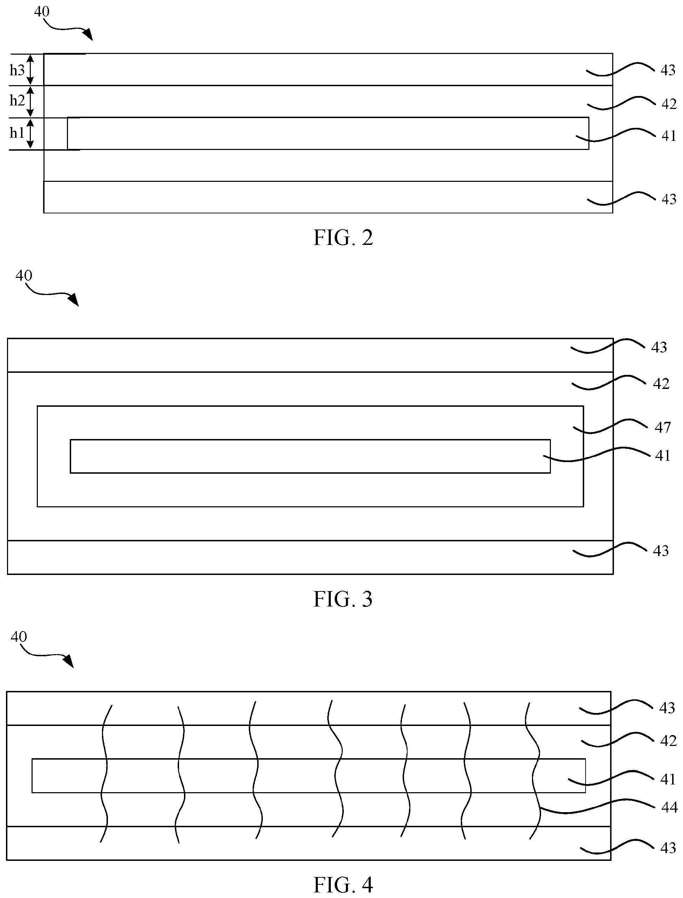

FIG. 2 illustrates a schematic structure of a gas-phase hazardous substance treatment member 40 provided in the present application. As shown in FIG. 2, the gas-phase hazardous substance treatment member 40 comprises: a first particle layer 41, a second particle layer 42, and a breathable cushion 43, the second particle layer 42 wrapping the first particle layer 41, and the breathable cushion 43 being disposed on both sides of the second particle layer 42 along a thickness direction thereof.

The first particle layer 41 comprises metal or alloy containing particles, the metal or alloy containing particles being used for treating at least one of the hazardous gases generated by the energy storage device 100 (the energy storage device); and the second particle layer 42 comprises carbonaceous particles, the carbonaceous particles being used for treating at least one of the hazardous gases.

In the implementation of the present application, due to first pores formed among the carbonaceous particles and second pores of the carbonaceous particles themselves, it is convenient for the carbonaceous particles to absorb the carbon dioxide, and at the same time, some of the hazardous gases generated by the energy storage device 100 circulate along the first pores and the second pores to the first particle layer 41 and are treated by the first particle layer 41, so as to ensure the reliability of the treatment by the gas-phase hazardous substance treatment member 40 on the hazardous gases and guarantee the processing effect. Moreover, by wrapping the second particle layer 42 around the first particle layer 41, the leakage of the metal or alloy containing particles to the electrode assembly 20, which may cause a short circuit of the energy storage device 100, can be reduced, thereby effectively guaranteeing the safety performance of the energy storage device 100. In addition, since the second particle layer 42 is located between two layers of the breathable cushion 43, while avoiding blocking the circulation of the hazardous gases, it is convenient to provide a buffering effect, avoiding a situation in which the particles of the first particle layer 41 and the second particle layer 42 are separated due to vibration or other reasons of the gas-phase hazardous substance treatment member 40, and ensuring the structural stability of the gas-phase hazardous substance treatment member 40.

The gas-phase hazardous substance treatment member 40 may be a circular structure, a rectangular structure, and other structures of any shape, which is not limited by the embodiments of the present application.

The carbonaceous particles comprised in the second particle layer 42 may be at least one of activated carbon particles, carbon nanotubes, and the like, and the metal or alloy containing particles comprised in the first particle layer 41 may be at least one of hydroxide particles of alkali metals, hydroxide particles of alkaline earth metals, zirconium-vanadium-iron ternary alloy particles, cobalt oxide particles, copper oxide particles, magnesium oxide particles, and the like.

The hazardous gases generated by the energy storage device 100 (energy storage device) mainly comprises carbon dioxide, water vapour, oxygen, carbon monoxide, hydrofluoric acid, and the like. The activated carbon particles, carbon nanotubes and other carbonaceous particles are mainly used for absorbing carbon dioxide, water vapour and the like in the hazardous gases, the hydroxide particles of alkali metals, the hydroxide particles of alkaline earth metals are mainly used for absorbing carbon dioxide in the hazardous gases, the zirconium-vanadium-iron ternary alloy particles are mainly used for absorbing oxygen in the hazardous gases, the cobalt oxide particles and the copper oxide particles are mainly used for absorbing carbon monoxide in the hazardous gases, and the magnesium oxide particles are mainly used for absorbing hydrofluoric acid in the hazardous gases.

In some implementations, a thickness h1 of the first particle layer 41 (as shown in FIG. 2) is not less than 100 microns and not greater than 180 microns. In this way, by limiting the minimum thickness of the first particle layer 41, a situation in which the first particle layer 41 comprises a small amount of metal-containing particles and cannot effectively treat the hazardous gases is avoided; and by limiting the maximum thickness of the first particle layer 41, a situation in which the gas-phase hazardous substance treatment member 40 interferes with the sealing of the opening of the case 10 by the top lid 30 when the gas-phase hazardous substance treatment member 40 is fixed to an inner surface of the top lid 30 due to that the size of the gas-phase hazardous substance treatment member 40 is too thick, is avoided. Exemplarily, the first particle layer 41 has a thickness of 100 microns, 120 microns, 140 microns, 160 microns, 180 microns.

In some implementations, the second particle layer 42 has a thickness h2 (shown in FIG. 2) of not less than 200 microns and not greater than 400 microns on one side in the thickness direction of the first particle layer 41. In this manner, by limiting the minimum thickness of the second particle layer 42 on one side in the thickness direction of the first particle layer 41, a situation in which the second particle layer 42 comprises a small amount of carbonaceous particles and cannot effectively treat the hazardous gases is avoided; and by limiting the maximum thickness of the second particle layer 42 on one side in the thickness direction of the first particle layer 41, a situation in which the gas-phase hazardous substance treatment member 40 interferes with the sealing of the opening of the case 10 by the top lid 30 when the gas-phase hazardous substance treatment member 40 is fixed to an inner surface of the top lid 30 due to that the size of the gas-phase hazardous substance treatment member 40 is too thick, is avoided. Exemplarily, the second particle layer 42 has a thickness of 200 microns, 240 microns, 280 microns, 320 microns, 360 microns, 400 microns on one side in the thickness direction of the first particle layer 41.

In some implementations, the particle size of the carbonaceous particles is greater than the particle size of the metal or alloy containing particles. In this way, after the second particle layer 42 of the carbonaceous particles wraps the first particle layer 41 of the metal or alloy containing particles, the first pores and the second pores of the second particle layer 42 facilitate the improvement of the effect of the circulation of the hazardous gases through the second particle layer 42 and ensure the simultaneous treatment of the hazardous gases by the second particle layer 42 and the first particle layer 41, and at the same time, based on the metal or alloy containing particles of small particles, it is facilitated to improve the structural stability of the first particle layer 41.

Based on the permeability characteristics of the breathable cushion 43, the large carbonaceous particles and the small metal or alloy containing particles, in the formation of the gas-phase hazardous substance treatment member 40, it is inevitable that a small amount of carbonaceous particles will be embedded in the breathable cushion 43, thus increasing the adhesion strength between the second particle layer 42 and the breathable cushion 43 through the embedding of particles, and it is inevitable that a small amount of metal or alloy containing particles will be embedded in the carbonaceous particles, thus increasing the adhesion strength between the second particle layer 42 and the first particle layer 41 through the embedding of particles, thereby ensuring the structural stability of the gas-phase hazardous substance treatment member 40.

Optionally, the particle size of the metal or alloy containing particles is not greater than 70 microns, and the particle size of the carbonaceous particles is not greater than 180 microns. Exemplarily, the particle size of the metal containing particles is less than 60 microns, and the particle size of the carbonaceous particles is less than 160 microns.

In this way, by limiting the maximum particle size of the metal or alloy containing particles and the maximum particle size of the carbonaceous particles, the compactness of the first particle layer 41 and the second particle layer 42 is ensured, thereby ensuring the stability of the structural layer of the gas-phase hazardous substance treatment member 40, and avoiding the separation of particles within the layer. It also avoids a situation in which a larger particle size of the carbonaceous particles results in a larger first pore between the carbonaceous particles, causing the metal or alloy containing particles to leak out along the first pores to the electrode assembly 20, resulting in an internal short circuit in the energy storage device 100.

In some implementations, as shown in FIG. 3, the gas-phase hazardous substance treatment member 40 further comprises a third particle layer 47, the third particle layer 47 is disposed between the first particle layer 41 and the second particle layer 42, and the third particle layer 47 comprises particles of salts for treating at least one of the hazardous gases.

In this way, by providing the third particle layer 47 between the first particle layer 41 and the second particle layer 42, it is convenient to realize the treatment of the hazardous gases by means of the three particle layers with different types of particles, so as to effectively improve the effect of the gas-phase hazardous substance treatment member 40 on the treatment of the hazardous gases, thereby reducing the impact of the hazardous gases on the energy storage device 100.

The third particle layer 47 may be completely wrapped around the first particle layer 41 as shown in FIG. 3, or the third particle layer 47 may be provided only between the first particle layer 41 and the above second particle layer 42, or only between the first particle layer 41 and the below second particle layer 42, which is not limited by the embodiments of the present application. The particles of salts may be LiXOy (where X is selected from one of zirconium, iron, nickel, titanium, silicon, and y is 2-4), potassium permanganate and the like, and the particles of salts may be used for absorbing carbon dioxide, water vapour and the like of the hazardous gases, and the potassium permanganate particles may be used for absorbing carbon monoxide and carbon dioxide of the hazardous gases.

Optionally, in combination with the above-described situation where the particle size of the carbonaceous particles is greater than the particle size of the metal or alloy containing particles, the particle size of the particles of salts is greater than the particle size of the metal or alloy containing particles and less than the particle size of the carbonaceous particles, in the case where the carbonaceous particles and the particles of salts are of the same thickness, it is convenient to provide the particles of salts with a larger number of particles, thereby facilitating an effective increase in the amount of carbon dioxide in the hazardous gas to be processed by the gas-phase hazardous substance treatment member 40. In addition, wrapping the small metal or alloy containing particles by the large particles of salts facilitates ensuring that the hazardous gases circulate through the pores between the particles of salts, and thus ensures that the metal or alloy containing particles treat the hazardous gases.

In the implementation of the present application, the breathable cushion 43 is a gasket with elasticity (i.e., deformed after pressure is applied and restored to its original state after the pressure is withdrawn, or slightly deformed after the pressure is withdrawn compared to its original state) and ensuring circulation of the hazardous gases, such as an asbestos cushion, etc.; in this way, the acting force exerted on the second particle layer 42 and the first particle layer 41 due to vibration or other reasons can be alleviated through the elastic deformation of the breathable cushion 43, so as to prevent the particles in the first particle layer 41 and the second particle layer 42 from separating due to vibration or the like, thereby ensuring the structural stability of the gas-phase hazardous substance treatment member 40.

In addition, the breathable cushion 43 is made of a material having an insulating property and a flame retardant property, so that the breathable cushion 43 has elasticity and breathability, and also has the insulating property and the flame retardant property, thus avoiding the situation of short circuit caused by the internal structure of the energy storage device 100 being connected by the breathable cushion 43, and flame retardant effect is achieved by the breathable cushion 43, thereby improving the safety performance.

In some implementations, the thickness h3 of the breathable cushion 43 (as shown in FIG. 2) is not less than 500 microns and not greater than 1200 microns. In this way, by limiting the minimum thickness of the breathable cushion 43, it is avoided that the breathable cushion 43 is thin and cannot play the role of effective buffering, and at the same time, it is ensured that the breathable cushion 43 has a certain supporting performance, which in turn ensures the stability of the gas-phase hazardous substance treatment member 40; and by limiting the maximum thickness of the breathable cushion 43, it is avoided that the dimension of the gas-phase hazardous substance treatment member 40 is too thick, which may cause a problem of interfering with the sealing of the opening of the case 10 by the top lid 30 when the gas-phase hazardous substance treatment member 40 is fixed to the inner surface of the top lid 30. Exemplarily, the thickness of the breathable cushion 43 is 500 microns, 800 microns, 1000 microns, 1200 microns.

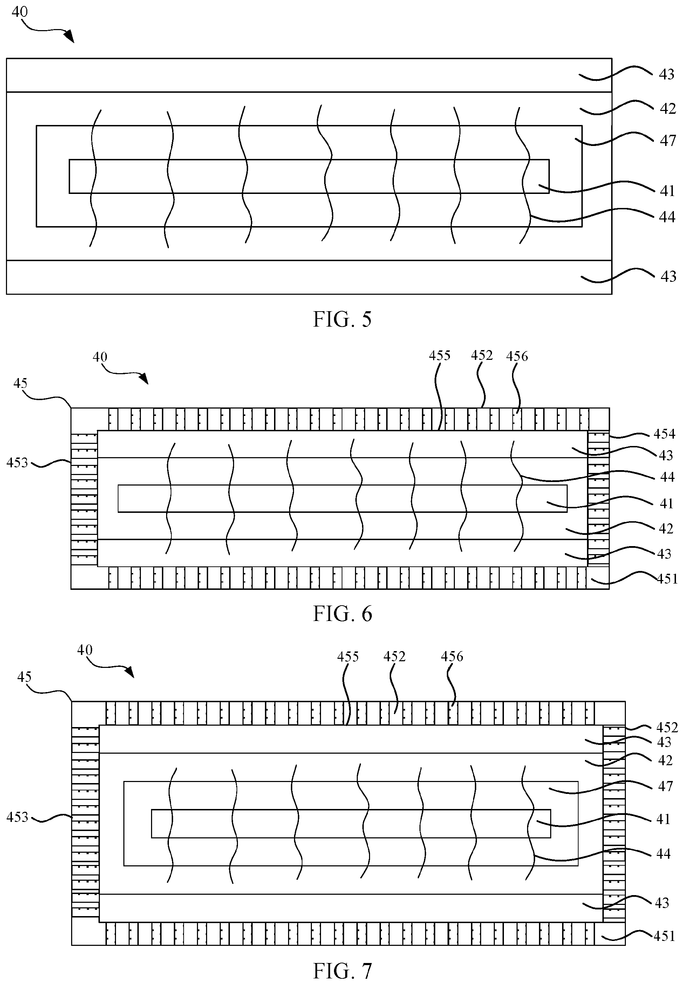

In some implementations, as shown in FIG. 4 or FIG. 5, the gas-phase hazardous substance treatment member 40 further comprises a tension member 44, and the tension member 44 runs through the first particle layer 41 and the second particle layer 42 in the thickness direction of the gas-phase hazardous substance treatment member 40. In this way, by the provision of the tension member 44, the first particle layer 41 and the second particle layer 42 may be achieved as a whole, and a situation in which the first particle layer 41 and the second particle layer 42 are separated is avoided, so as to further improve the structural stability of the gas-phase hazardous substance treatment member 40.

The thickness direction of the gas-phase hazardous substance treatment member 40 may be a direction perpendicular to the surface of the gas-phase hazardous substance treatment member 40, or may be a direction in which the angle formed with the surface of the gas-phase hazardous substance treatment member 40 is an acute angle, which is not limited by the implementations of the present application.

Optionally, the tension member 44 is a carbon fibre or a glass fibre. Since the fibres are all flocculent structure, the situation in which the number of particles in the first particle layer 41 and the second particle layer 42 is reduced due to the tension member 44 occupying the space is avoided, thereby ensuring the treatable gas volume of the gas-phase hazardous substance treatment member 40. As for the tension member 44 of the carbon fibre or glass fibre structure, it can be ripped into the first particle layer 41 and the second particle layer 42 by high-pressure gas, or it can be ripped into the first particle layer 41 and the second particle layer 42 by other methods, which is not limited by the implementations of the present application.

In some implementations, as shown in FIG. 6 or FIG. 7, the gas-phase hazardous substance treatment member 40 further comprises a housing 45, at least one wall of the housing 45 having a breathing hole 456; the housing 45 comprises a bottom plate 451, a top plate 452, a side plate 453, and a baffle 454, and the bottom plate 451, the top plate 452, and the side plate 453 form a cavity 455 that is open on one side, and the baffle 454 caps the opening of the cavity 455, and the first particle layer 41, the second particle layer 42, and the breathable cushion 43 are all disposed within the cavity 455. In this way, the first particle layer 41 and the second particle layer 42 are communicated with the outer space of the housing 45 through the breathing holes 456 on the housing wall of the housing 45 to ensure that the gas-phase hazardous substance treatment member 40 treats the hazardous gases; and the first particle layer 41, the second particle layer 42 and the breathable cushion 43 are accommodated in the cavity 455 of the housing 45 to further improve the stability of the gas-phase hazardous substance treatment member 40 and avoid a situation where the particles of the first particle layer 41 and the second particle layer 42 are separated.

The maximum aperture of the breathing hole 456 provided in the housing wall of the housing 45 may be less than the particle size of the particles (e.g., carbonaceous particles) of the second particle layer 42 to avoid the particles of the second particle layer 42 from dropping out from the breathing hole 456 in the housing 45. The housing wall of the housing 45 has a certain structural strength to ensure the structural stability of the first particle layer 41 and the second particle layer 42 in the cavity 455. The wall thickness of the housing 45 is not less than 0.8 mm and not greater than 2.4 mm to ensure the structural strength of the housing 45, and at the same time, to avoid that the housing 45 is thick, which increases the weight of the gas-phase hazardous substance treatment member 40 and takes up more space. The housing 45 is made of an insulating material to avoid short circuit in some structures inside the energy storage device 100 caused by the housing 45. Exemplarily, the material from which the housing 45 is made may be a heat-resistant plastic (e.g., PP plastic), or other materials, as long as the housing wall of the housing 45 is made to have a certain structural strength, and the housing 45 has the insulating property, which are not limited by the implementations of the present application.

Optionally, as shown in FIG. 6 or FIG. 7, the bottom plate 451, the top plate 452, the side plate 453, and the baffle 454 all have breathing holes 456. In this way, the breathing holes 456 are provided in a plurality of housing walls of the housing 45, so as to avoid that the breathing holes 456 on the housing wall of a certain direction are unable to pass through the hazardous gases or the rate of passing through the hazardous gases is slow based on the increase of the direction of permeability and the permeable channels, thereby improving the reliability of the gas-phase hazardous substance treatment member for treating the hazardous gases.

The baffle 454 can achieve sealing by welding or by bonding on the opening side of the cavity 455.

For the energy storage device 100, from production to use, the hazardous gases are generated during the formation stage and also during the charging and discharging process, and for the hazardous gases generated during the formation stage, the corresponding suction device is usually used to pull out along the liquid injection hole, thus the hazardous gases generated only during the charging and discharging process have an effect on the performance of the energy storage device 100.

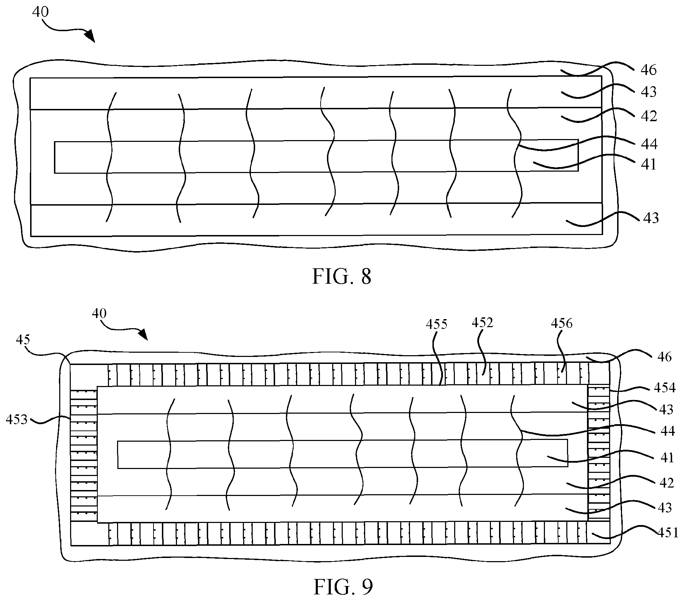

At the formation stage, the gas-phase hazardous substance treatment member 40 has been assembled in the energy storage device 100, and at this time, in order to avoid that the first particle layer 41 and the second particle layer 42 comprised in the gas-phase hazardous substance treatment member 40 touch the generated hazardous gases during the formation stage, in some implementations, the gas-phase hazardous substance treatment member 40 also comprises a cladding layer 46. As shown in FIG. 8, the gas-phase hazardous substance treatment member 40 does not comprise a housing 45, and at this time, the cladding layer 46 wraps around the second particle layer 42 and the breathable cushion 43; and as shown in FIG. 9, the gas-phase hazardous substance treatment member 40 comprises a housing 45, and at this time, the cladding layer 46 wraps around the housing 45.

The melting temperature of the cladding layer 46 is not less than 46 degrees Celsius and not greater than 58 degrees Celsius; or the melting temperature of the cladding layer 46 is not less than 70 degrees Celsius and not greater than 78 degrees Celsius.

For the case where the melting temperature of the cladding layer 46 is not less than 46 degrees Celsius and not greater than 58 degrees Celsius, since the temperature of the energy storage device 100 is roughly 45 degrees Celsius (less than 46 degrees Celsius) during the formation stage, at this time, the cladding layer 46 of the gas-phase hazardous substance treatment member 40 is in the solid phase, so as to avoid the hazardous gases generated during the formation stage to be processed by the second particle layer 42 and the first particle layer 41; and the temperature of the energy storage device 100 during charging and discharging is about 60 degrees Celsius (greater than 58 degrees Celsius), at which time the cladding layer 46 of the gas-phase hazardous substance treatment member 40 melts into a liquid phase and flows to the bottom of the accommodation cavity 11, after which it is convenient for the hazardous gases to enter into the gas-phase hazardous substance treatment member 40, so as to ensure that the hazardous gases generated during the charging and discharging phase can be treated by the second particle layer 42 and the first particle layer 41. In this way, the cladding layer 46 of the gas-phase hazardous substance treatment member 40 is capable of avoiding treatment of the hazardous gases generated at the formation stage, and at the same time ensuring effective treatment of the hazardous gases generated at the charging and discharging stage, thereby improving the reliability of the gas-phase hazardous substance treatment member 40.

For the case where the melting temperature of the cladding layer 46 is not less than 70 degrees Celsius and not greater than 78 degrees Celsius, the temperature of the energy storage device 100 is about 60 degrees Celsius (less than 70 degrees Celsius) during charging and discharging, at which time the cladding layer 46 of the gas-phase hazardous substance treatment member 40 is in the solid phase, thus preventing the hazardous gases generated during the charging and discharging phases from being processed by the second particle layer 42 and the first particle layer 41; and when the thermal runaway of the energy storage device 100 occurs, the temperature is about 80 degrees Celsius (greater than 78 degrees Celsius), at which time the cladding layer 46 of the gas-phase hazardous substance treatment member 40 melts into a liquid phase and flows to the bottom of the accommodation cavity 11, after which it is convenient for the hazardous gases to enter the gas-phase hazardous substance treatment member 40, so as to ensure that the hazardous gases can be treated by the second particle layer 42 and the first particle layer 41 during the thermal runaway of the energy storage device 100. In this way, for the cladding layer 46 of the gas-phase hazardous substance treatment member 40, the cladding layer 46 can be melt when the thermal runaway of the energy storage device 100 occurs, then the hazardous gases can be treated through the gas-phase hazardous substance treatment member 40, the duration of the thermal runaway is prolonged, which facilitates to prolong the reaction duration of the battery management system.

The cladding layer 46 of the gas-phase hazardous substance treatment member 40 can avoid side reaction with the electrolyte, water, and the like within the energy storage device 100, thereby avoiding other negative impacts on the energy storage device 100. Exemplarily, the coating agent used for the cladding layer 46 of the gas-phase hazardous substance treatment member 40 may be an inert phase change material such as paraffin wax, wax acid, polyethylene wax, and the like.

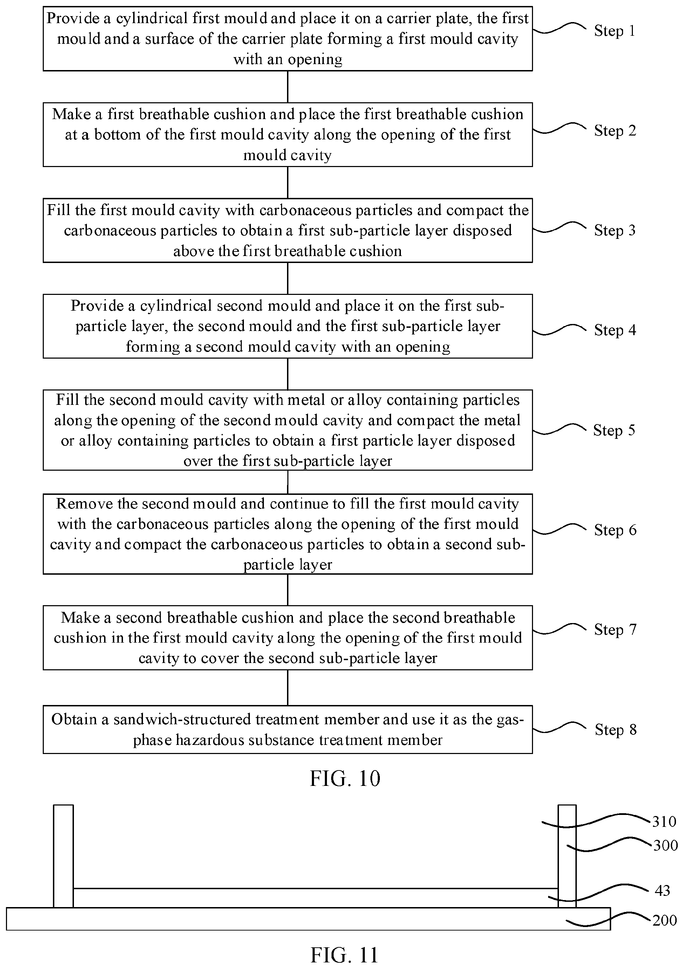

Implementations of the present application also provide a method of preparing the gas-phase hazardous substance treatment member 40, which is used to prepare the gas-phase hazardous substance treatment member 40 described in the above implementations. As shown in FIG. 10, the method comprises step 1 - step 9 as follows.

In step 1, a chimney-shaped first mould 300 is provided and placed on a carrier plate 200, the first mould 300 and a surface of the carrier plate 200 forming a first mould cavity 310 with an opening.

In step 2, a first breathable cushion 43 is made and placed at a bottom of the first mould cavity 310 through the opening of the first mould cavity 310, as shown in FIG. 11.

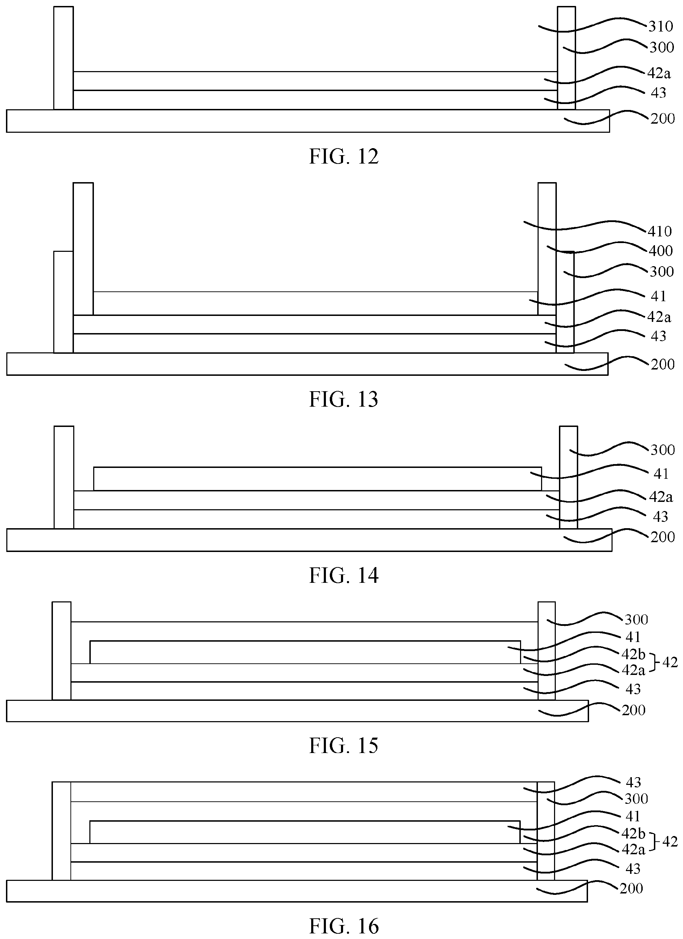

In step 3, carbonaceous particles are filled in the first mould cavity 310 and compacted to obtain a first sub-particle layer 42a disposed on the first breathable cushion 43, as shown in FIG. 12.

In step 4, a chimney-shaped second mould 400 is provided and placed on the first sub-particle layer 42a, the second mould 400 and the first sub-particle layer 42a forming a second mould cavity 410 with an opening.

In step 5, metal or alloy containing particles are filled in the second mould cavity 410 through the opening of the second mould cavity 410 and compacted to obtain a first particle layer 41 disposed on the first sub-particle layer 42a, as shown in FIG. 13.

In step 6: the second mould 400 is removed and it is continued to fill the carbonaceous particles in the first mould cavity 310 through the opening of the first mould cavity 310 and compact to obtain a second sub-particle layer 42b, the first sub-particle layer 42a and the second sub-particle layer 42b forming a second particle layer 42 wrapping the first particle layer 41, as shown in FIG. 14 and FIG. 15.

In step 7: a second breathable cushion 43 is made and placed in the first mould cavity 310 through the opening of the first mould cavity 310 to cover the second sub-particle layer 42b, as shown in FIG. 16.

In step 8: the first mould 300 is removed to obtain a treatment member with sandwich structure and use it as the gas-phase hazardous substance treatment member 40.

In the implementation of the present application, for the gas-phase hazardous substance treatment member 40 prepared by the method described above, due to the first pores formed among the carbonaceous particles and the second pores possessed by the carbonaceous particles themselves, it is convenient for the carbonaceous particles to absorb the carbon dioxide and other hazardous gases, and at the same time, a part of the hazardous gases generated by the energy storage device is also able to circulate along the first pores and the second pores to the first particle layer 41, and then be treated by the first particle layer 41, thereby ensuring the reliability of the gas-phase hazardous substance processing member 40 in processing the hazardous gases and ensuring the processing effect; and through the wrapping of the second particle layer 42 of the carbonaceous particles to the first particle layer 41 of the metal or alloy containing particles, the situation of short circuit of the energy storage device 100 due to the leakage of the metal or alloy containing particles to the electrode assembly 20 can be reduced, thereby effectively ensuring the safety performance of the energy storage device 100. In addition, since the second particle layer 42 is located between two layers of the breathable cushion 43, while avoiding blocking the circulation of the harmful gas, it is convenient to provide a cushioning effect to avoid the situation in which the particles of the first particle layer 41 and the second particle layer 42 are separated due to vibration or other reasons of the gas-phase hazardous substance treatment member 40, so as to ensure the structural stability of the gas-phase hazardous substance treatment member 40.

When the gas-phase hazardous substance treatment member 40 is prepared according to the above method, the shape, material, thickness and other parameters of each structural layer can be referred to as described in the above implementations, and the implementations of the present application will not repeat in this regard.

In some implementations, after the above step 8, the method further comprises: providing a housing 45, at least one housing wall of the housing 45 having a breathing hole 456, the housing 45 comprising a bottom plate 451, a top plate 452, a side plate 453, and a baffle 454, the bottom plate 451, the top plate 452, and the side plate 453 forming a cavity 455 that is open on one side, and the baffle 454 being used to cap the opening of the cavity 455; placing the obtained treatment member with a sandwich structure into the cavity 455 to obtain the gas-phase hazardous substance treatment member 40. In this way, by fixing the treatment member with a sandwich structure by the housing, it facilitates ensuring the stability of the structural layers in the gas-phase hazardous substance treatment member 40, especially the stability of the first particle layer 41 and the second particle layer 42, and avoiding the particles from separating after extrusion.

The characteristics of the housing 45 can be specifically referred to in the above implementations, and the implementations of the present application will not be repeated in this regard.

In some implementations, after the step 8, the method further comprises: placing the obtained gas-phase hazardous substance treatment member 40 in a liquid-phase coating agent; removing the gas-phase hazardous substance treatment member 40 from the coating agent, and forming the cladding layer 46 after cooling.

The melting temperature of the coating agent is not less than 46 degrees Celsius and not greater than 58 degrees Celsius; or the melting temperature of the cladding layer 46 is not less than 70 degrees Celsius and not greater than 78 degrees Celsius.

For the case where the melting temperature of the coating agent is not less than 46 degrees Celsius and not greater than 58 degrees Celsius, since the temperature of the energy storage device 100 is about 45 degrees Celsius (less than 46 degrees Celsius) during the formation stage, at this time, the cladding layer 46 of the gas-phase hazardous substance treatment member 40 is in the solid phase, so as to avoid that the hazardous gases generated during the formation stage are processed by the second particle layer 42 and the first particle layer 41; the temperature of the energy storage device 100 during charging and discharging is approximately 60 degrees Celsius (greater than 58 degrees Celsius), at this time, the cladding layer 46 of the gas-phase hazardous substance treatment member 40 melts into a liquid phase and flows to the bottom of the accommodation cavity 11, which facilitates the entry of the hazardous gases into the gas-phase hazardous substance treatment member 40, thereby ensuring that the hazardous gases generated during the charging and discharging stages can be processed by the second particle layer 42 and the first particle layer 41. In this way, the cladding layer 46 of the gas-phase hazardous substance treatment member 40 can avoid the treatment on the generated hazardous gases during the formation stage, while ensuring effective treatment of the generated hazardous gases during the charging and discharging stages, thereby improving the reliability of the gas-phase hazardous substance treatment member 40.

For the case where the melting temperature of the coating agent is not less than 70 degrees Celsius and not greater than 78 degrees Celsius, the temperature of the energy storage device 100 is about 60 degrees Celsius (less than 70 degrees Celsius) during charging and discharging, and at this time, the cladding layer 46 of the gas-phase hazardous substance treatment member 40 is in the solid phase, so as to avoid that the hazardous gases generated during the charging and discharging stages are treated by the second particle layer 42 and the first particle layer 41; and when the thermal runaway of the energy storage device 100 occurs, the temperature is about 80 degrees Celsius (greater than 78 degrees Celsius), at which time the cladding layer 46 of the gas-phase hazardous substance treatment member 40 melts into a liquid phase and flows to the bottom of the accommodation cavity 11, after which it is convenient for the hazardous gases to enter the gas-phase hazardous substance treatment member 40, so as to ensure that the hazardous gases can be treated by the second particle layer 42 and the first particle layer 41 during the thermal runaway of the energy storage device 100. In this way, the cladding layer 46 of the gas-phase hazardous substance treatment member 40 can achieve melting of the cladding layer 46 when the thermal runaway of the energy storage device 100 occurs, thereby prolonging the duration of the thermal runaway through the treatment of the hazardous gases by the gas-phase hazardous substance treatment member 40 to prolong the duration of the response duration of the battery management system.

In some implementations, the above step 4 comprises:
step 4A, providing a chimney-shaped third mould 500 and placing it on the first sub-particle layer 42a, the third mould 500 and the first sub-particle layer 42a forming a third mould cavity 510 having an opening.

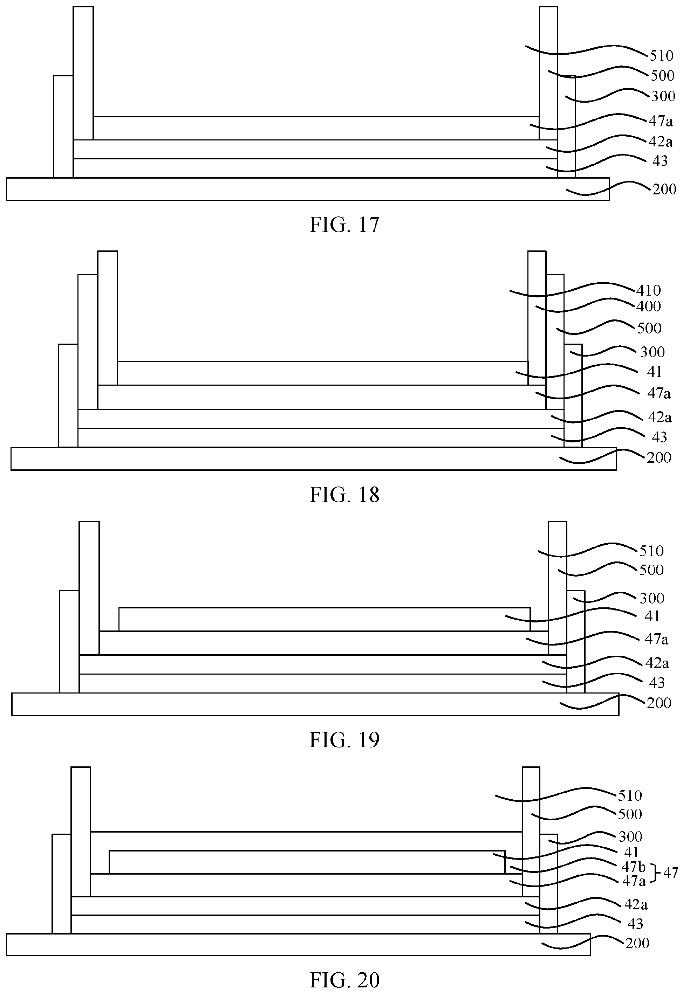

In step 4B, particles of salts are filled in the third mould cavity 510 through the opening of the third mould cavity 510 and compacted to obtain a third sub-particle layer 47a disposed on the first sub-particle layer 42a, as shown in FIG 17.

In step 4C, a chimney-shaped second mould 400 is provided and placed on the third sub-particle layer 47a, the second mould 400 and the third sub-particle layer 47a forming a second mould cavity with an opening 410, as shown in FIG. 18.

Accordingly, the step 6 comprises: step 6A, removing the second mould 400 and continuing to fill the third mould cavity 510 with particles of salts through the opening of the third mould cavity 510, and compacting the particles of salts to obtain a fourth sub-particle layer 47b, the third sub-particle layer 47a and the fourth sub-particle layer 47b forming a third particle layer 47 encasing the first particle layer 41 as shown in FIGs. 19 and 20.

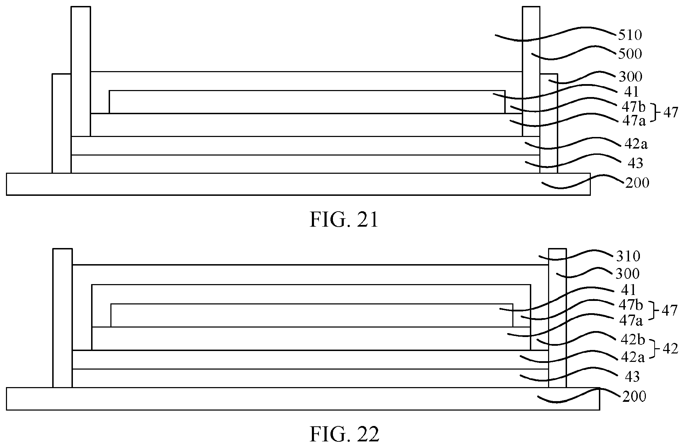

In step 6B, the third mould 500 is removed and the filling of the first mould cavity 310 with carbonaceous particles is continued through the opening of the first mould cavity 310 and compacted to obtain a second sub-particle layer 42b, the first sub-particle layer 42a and the second sub-particle layer 42b constituting a second particle layer 42 wrapping the third particle layer 47, as shown in FIGs. 21 and 22.

In this way, by providing the third particle layer 47 completely wrapping the first particle layer 41 between the first particle layer 41 and the second particle layer 42, it is convenient to realize the treatment of the hazardous gas through the three particle layers with different types of particles, so as to effectively improve the treatment effect of the gas-phase hazardous substance treatment member 40 on the hazardous gas, and thereby reducing the impact of the hazardous gas on the energy storage device 100.

Implementations of the present application also provide an electrical equipment, which may be an energy storage device, a vehicle, an energy storage container, and the like. The electrical equipment comprises an energy storage device 100 as described in the above-described implementations, and the energy storage device 100 supplies power to the electrical equipment. In this way, in combination with the energy storage device 100 described above, the electrical equipment of the present application can improve the stability of the work of the electrical equipment, and reduce the safety risks when the electrical equipment is in operation.

In the present application, the terms "first", "second", and "third" are only used for descriptive purposes and cannot be understood as indicating or implying relative importance. The term "a plurality of" refers to two or more, unless otherwise specified. The terms "install", "communication ", "connection", "fix" and other terms may be broadly understood. For example, "connection" can be a fixed connection, a detachable connection, or an integrated connection; "communication" can be directly connected or indirectly connected through intermediate media. For those skilled in the art, the specific meanings of the above terms in the present application can be understood based on specific circumstances.

In the description of the present application, it may be understood that the orientation or position relationship indicated by the terms "up", "down", "left", "right", "front", "back", etc. is the orientation or position relationship shown based on the drawings, which is only for the convenience of describing the present application and simplifying the description, rather than indicating or implying that the device or unit referred to must have a specific direction, be constructed and operated in a specific orientation. Therefore, it cannot be understood as a limitation on the present application.

In the description of this specification, the terms "one embodiment", "some embodiments", "specific embodiments", etc. refer to the specific features, structures, materials, or features described in conjunction with the embodiment or example being comprised in at least one embodiment or example of the present application. In this specification, the illustrative expressions of the above terms may not necessarily refer to the same embodiments or examples. Moreover, the specific features, structures, materials, or features described can be combined in an appropriate manner in any one or more embodiments or examples.

## Claims

1. A gas-phase hazardous substance treatment member (40), comprising:
a first particle layer (41), comprising metal or alloy containing particles, the metal-containing or alloy-type particles treating at least one of hazardous gases generated by an energy storage device;
a second particle layer (42), wrapping the first particle layer (41) and comprising carbonaceous particles, the carbonaceous particles treating at least one of the hazardous gases; and
a breathable cushion (43), disposed on two sides of the second particle layer (42) along a thickness direction of the second particle layer (42).

2. The gas-phase hazardous substance treatment member (40) according to claim 1, wherein the gas-phase hazardous substance treatment member (40) further comprises a housing (45), at least one housing wall of the housing (45) has a breathing hole (456);
the housing (45) comprises a bottom plate (451), a top plate (452), a side plate (453) and a baffle (454), wherein the bottom plate (451), the top plate (452) and the side plate (453) form a cavity (455) with an opening defined in a side, the baffle (454) caps the opening of the cavity (455), and the first particle layer (41), the second particle layer (42), and the breathable cushion (43) are all located within the cavity (455).

3. The gas-phase hazardous substance treatment member (40) according to claim 2, wherein the bottom plate (451), the top plate (452), the side plate (453), and the baffle (454) all have the breathing holes (456).

4. The gas-phase hazardous substance treatment member (40) according to claim 1, wherein the gas-phase hazardous substance treatment member (40) further comprises a cladding layer (46), and the cladding layer (46) wraps around the second particle layer (42) and the breathable cushion (43);
the cladding layer (46) has a melting temperature of not less than 46 degrees Celsius and not greater than 58 degrees Celsius; or the cladding layer (46) has a melting temperature of not less than 70 degrees Celsius and not greater than 78 degrees Celsius.

5. The gas-phase hazardous substance treatment member (40) according to claim 2 or 3, wherein the gas-phase hazardous substance treatment member (40) further comprises a cladding layer (46), and the cladding layer (46) wraps around the housing (45);
the cladding layer (46) has a melting temperature of not less than 46 degrees Celsius and not greater than 58 degrees Celsius; or the cladding layer (46) has a melting temperature of not less than 70 degrees Celsius and not greater than 78 degrees Celsius.

6. The gas-phase hazardous substance treatment member (40) according to according to any one of claims 1 to 4, wherein the gas-phase hazardous substance treatment member (40) further comprises a tension member (44), and the tension member (44) runs through the first particle layer (41) and the second particle layer (42) in a thickness direction of the gas-phase hazardous substance treatment member (40),
wherein preferably the tension member (44) is a carbon fibre or a glass fibre.

7. The gas-phase hazardous substance treatment member (40) according to any one of claims 1 to 4, wherein a particle size of the metal or alloy containing particles is not greater than 70 microns, and a particle size of the carbonaceous particles is greater than the particle size of the metal or alloy containing particles and not greater than 180 microns, or
wherein a thickness of the first particle layer (41) is not less than 100 microns and not greater than 180 microns, or
wherein the second particle layer (42) has a thickness of not less than 200 microns and not greater than 400 microns on a side of the first particle layer (41) along a thickness direction of the first particle layer (41).

8. The gas-phase hazardous substance treatment member (40) according to according to any one of claims 1 to 4, wherein a thickness of the breathable cushion (43) is not less than 500 microns and not greater than 1200 microns.

9. The gas-phase hazardous substance treatment member (40) according to according to any one of claims 1 to 4, wherein the gas-phase hazardous substance treatment member (40) further comprises a third particle layer (47);
the third particle layer (47) is located between the first particle layer (41) and the second particle layer (42), the third particle layer (47) comprises particles of salts, and the particles of salts treating at least one of the hazardous gases,
wherein preferably a particle size of the particles of salts is greater than a particle size of the metal or alloy containing particles and less than a particle size of the carbonaceous particles.

10. A preparation method of a gas-phase hazardous substance treatment member (40), for preparing a gas-phase hazardous substance treatment member (40) according to any one of claims 1 to 9, the method comprising:
step 1, providing a chimney-shaped first mould (300) and placing it on a carrier plate (200), the first mould (300) and a surface of the carrier plate (200) cooperatively forming a first mould cavity (310) with an opening;
step 2, making a first breathable cushion (43) and placing the first breathable cushion (43) at a bottom of the first mould cavity (310) through the opening of the first mould cavity (310);
step 3, filling the first mould cavity (310) with carbonaceous particles and compacting the carbonaceous particles to obtain a first sub-particle layer (42a) disposed on the first breathable cushion (43);
step 4, providing a chimney-shaped second mould (400) and placing it on the first sub-particle layer (42a), the second mould (400) and the first sub-particle layer (42a) forming a second mould cavity (410) with an opening;
step 5, filling the second mould cavity (410) with metal or alloy containing particles through the opening of the second mould cavity (410), and compacting the metal or alloy containing particles to obtain a first particle layer (41) disposed on the first sub-particle layer (42a);
step 6, removing the second mould (400) and continuing to fill the first mould cavity (310) with the carbonaceous particles through the opening of the first mould cavity (310), and compacting the carbonaceous particles to obtain a second sub-particle layer (42b), the first sub-particle layer (42a) and the second sub-particle layer (42b) constituting a second particle layer (42) wrapping the first particle layer (41);
step 7, making a second breathable cushion (43) and placing the second breathable cushion (43) into the first mould cavity (310) through the opening of the first mould cavity (310) to cover the second sub-particle layer (42b);
step 8, removing the first mould (300) to obtain a sandwich-structured treatment member and use it as the gas-phase hazardous substance treatment member (40).

11. The method according to claim 10, wherein after the step 8, the method further comprises:
providing a housing (45), at least one housing wall of the housing (45) having a breathing hole (456), the housing (45) comprising a bottom plate (451), a top plate (452), a side plate (453) and a baffle (454), wherein the bottom plate (451), the top plate (452) and the side plate (453) forming a cavity (455) with an opening defined in one side, and the baffle (454) capping the opening of the cavity (455);
placing the obtained sandwich-structured treatment member into the cavity (455);
sealing the opening of the cavity (455) with the baffle (454) to obtain the gas-phase hazardous substance treatment member (40).

12. The method according to claim 10 or 11, wherein after the step 8, the method further comprises:
placing the obtained gas-phase hazardous substance treatment member (40) in a coating agent which is in a liquid phase, the coating agent having a melting temperature of not less than 46 degrees Celsius and not greater than 58 degrees Celsius, or the coating agent having a melting temperature of not less than 70 degrees Celsius and not greater than 78 degrees Celsius;
removing the gas-phase hazardous substance treatment member (40) from the coating agent and forming a cladding layer (46) after cooling.

13. The method according to claim 10, wherein the step 4 comprises:
step 4A, providing a chimney-shaped third mould (500) and placing it on the first sub-particle layer (42a), the third mould (500) and the first sub-particle layer (42a) forming a third mould cavity (510) with an opening;
step 4B, filling the third mould cavity (510) with particles of salts through the opening of the third mould cavity (510), and compacting the particles of salts to obtain a third sub-particle layer (47a) disposed on the first sub-particle layer (42a);
step 4C, providing a chimney-shaped second mould (400) and placing it on the third sub-particle layer (47a), the second mould (400) and the third sub-particle layer (47a) forming a second mould cavity (410) with an opening;
the step 6 comprises: step 6A, removing the second mould (400) and continuing to fill the third mould cavity (510) with the particles of salts through the opening of the third mould cavity (510), and compacting the particles of salts to obtain a fourth sub-particle layer, the third sub-particle layer (47a) and the fourth sub-particle layer constituting a third particle layer (47) wrapping the first particle layer (41);
step 6B, removing the third mould (500) and continuing to fill the first mould cavity (310) with the carbonaceous particles through the opening of the first mould cavity (310), and compacting the carbonaceous particles to obtain a second sub-particle layer (42b), the first sub-particle layer (42a) and the second sub-particle layer (42b) constituting a second particle layer (42) wrapping the third particle layer (47).

14. An energy storage device, comprising:
a case (10), comprising an accommodation cavity (11) having an opening;
an electrode assembly (20), accommodated within the accommodation cavity (11);
a top lid (30), sealing the opening of the accommodation cavity (11);
a gas-phase hazardous substance treatment member (40) according to any one of claims 1 to 9, disposed within the accommodation cavity (11) and for treating hazardous gases within the accommodation cavity (11).

15. An electrical equipment, comprising an energy storage device according to claim 14, wherein the energy storage device supplies power to the electrical equipment.

## Patentansprüche

1. Element zur Behandlung von gefährlichen Substanzen in der Gasphase (40), umfassend:
eine erste Partikelschicht (41) umfassend metall- oder legierungshaltige Partikel, wobei die metall- oder legierungshaltigen Partikel mindestens eines der von einer Energiespeichervorrichtung erzeugten gefährlichen Gase behandeln;
eine zweite Partikelschicht (42), die die erste Partikelschicht (41) umhüllt und kohlenstoffhaltige Partikel umfasst, wobei die kohlenstoffhaltigen Partikel mindestens eines der gefährlichen Gase behandeln; und
ein atmungsaktives Polster (43), das sich auf zwei Seiten der zweiten Partikelschicht (42) entlang der Dickenrichtung der zweiten Partikelschicht (42) befindet.

2. Element zur Behandlung von gefährlichen Substanzen in der Gasphase (40) gemäß Anspruch 1, wobei das Element zur Behandlung von gefährlichen Substanzen in der Gasphase (40) ferner ein Gehäuse (45) umfasst, wobei mindestens eine Gehäusewand des Gehäuses (45) ein Atmungsloch (456) aufweist;
das Gehäuse (45) eine Bodenplatte (451), eine Deckplatte (452), eine Seitenplatte (453) und eine Ablenkplatte (454) umfasst, wobei die Bodenplatte (451), die Deckplatte (452) und die Seitenplatte (453) einen Hohlraum (455) mit einer in einer Seite definierten Öffnung ausbilden, die Ablenkplatte (454) die Öffnung des Hohlraums (455) verschließt und die erste Partikelschicht (41), die zweite Partikelschicht (42) und das atmungsaktive Polster (43) sich alle innerhalb des Hohlraums befinden (455).

3. Element zur Behandlung von gefährlichen Substanzen in der Gasphase (40) gemäß Anspruch 2, wobei die Bodenplatte (451), die Deckplatte (452), die Seitenplatte (453) und die Ablenkplatte (454) alle die Atmungslöcher (456) aufweisen.

4. Element zur Behandlung von gefährlichen Substanzen in der Gasphase (40) gemäß Anspruch 1, wobei das Element zur Behandlung von gefährlichen Substanzen in der Gasphase (40) ferner eine Ummantelungsschicht (46) umfasst und die Ummantelungsschicht (46) die zweite Partikelschicht (42) und das atmungsaktive Polster (43) umhüllt;
die Ummantelungsschicht (46) eine Schmelztemperatur von nicht weniger als 46 Grad Celsius und nicht mehr als 58 Grad Celsius aufweist; oder die Ummantelungsschicht (46) eine Schmelztemperatur von nicht weniger als 70 Grad Celsius und nicht mehr als 78 Grad Celsius aufweist.

5. Element zur Behandlung von gefährlichen Substanzen in der Gasphase (40) gemäß Anspruch 2 oder 3, wobei das Element zur Behandlung von gefährlichen Substanzen in der Gasphase (40) ferner eine Ummantelungsschicht (46) umfasst und die Ummantelungsschicht (46) das Gehäuse (45) umhüllt;
die Ummantelungsschicht (46) eine Schmelztemperatur von nicht weniger als 46 Grad Celsius und nicht mehr als 58 Grad Celsius aufweist; oder die Ummantelungsschicht (46) eine Schmelztemperatur von nicht weniger als 70 Grad Celsius und nicht mehr als 78 Grad Celsius aufweist.

6. Element zur Behandlung von gefährlichen Substanzen in der Gasphase (40) gemäß einem der Ansprüche 1 bis 4, wobei das Element zur Behandlung von gefährlichen Substanzen in der Gasphase (40) ferner ein Spannelement (44) umfasst und das Spannelement (44) durch die erste Partikelschicht (41) und die zweite Partikelschicht (42) in einer Dickenrichtung des Elements zur Behandlung von gefährlichen Substanzen in der Gasphase (40) verläuft,
wobei das Spannelement (44) vorzugsweise eine Kohlenstofffaser oder eine Glasfaser ist.

7. Element zur Behandlung von gefährlichen Substanzen in der Gasphase (40) gemäß einem der Ansprüche 1 bis 4, wobei eine Partikelgröße der metall- oder legierungshaltigen Partikel nicht größer als 70 Mikrometer ist und eine Partikelgröße der kohlenstoffhaltigen Partikel größer als die Partikelgröße der metall- oder legierungshaltigen Partikel und nicht größer als 180 Mikrometer ist, oder
wobei eine Dicke der ersten Partikelschicht (41) nicht kleiner als 100 Mikrometer und nicht größer als 180 Mikrometer ist, oder
wobei die zweite Partikelschicht (42) eine Dicke von nicht weniger als 200 Mikrometern und nicht mehr als 400 Mikrometern auf einer Seite der ersten Partikelschicht (41) entlang einer Dickenrichtung der ersten Partikelschicht (41) aufweist.

8. Element zur Behandlung von gefährlichen Substanzen in der Gasphase (40) gemäß einem der Ansprüche 1 bis 4, wobei eine Dicke des atmungsaktiven Polsters (43) nicht weniger als 500 Mikrometer und nicht mehr als 1200 Mikrometer ist.

9. Element zur Behandlung von gefährlichen Substanzen in der Gasphase (40) gemäß einem der Ansprüche 1 bis 4, wobei das Element zur Behandlung von gefährlichen Substanzen in der Gasphase (40) ferner eine dritte Partikelschicht (47) umfasst;
wobei sich die dritte Partikelschicht (47) zwischen der ersten Partikelschicht (41) und der zweiten Partikelschicht (42) befindet, die dritte Partikelschicht (47) Partikel von Salzen umfasst und die Partikel von Salzen mindestens eines der gefährlichen Gase behandeln
wobei vorzugsweise eine Partikelgröße der Partikel von Salzen größer ist als eine Partikelgröße der metall- oder legierungshaltigen Partikel und kleiner als eine Partikelgröße der kohlenstoffhaltigen Partikel.

10. Herstellungsverfahren eines Elements zur Behandlung von gefährlichen Substanzen in der Gasphase (40) zur Herstellung eines Elements zur Behandlung von gefährlichen Substanzen in der Gasphase (40) gemäß einem der Ansprüche 1 bis 9, wobei das Verfahren Folgendes umfasst:
Schritt 1: Bereitstellen einer kaminförmigen ersten Form (300) und Platzieren derselben auf einer Trägerplatte (200), wobei die erste Form (300) und eine Oberfläche der Trägerplatte (200) zusammen einen ersten Formhohlraum (310) mit einer Öffnung ausbilden;
Schritt 2: Produzieren eines ersten atmungsaktiven Polsters (43) und Platzieren des ersten atmungsaktiven Polsters (43) an einem Boden des ersten Formhohlraums (310) durch die Öffnung des ersten Formhohlraums (310);
Schritt 3: Füllen des ersten Formhohlraums (310) mit kohlenstoffhaltigen Partikeln und Verdichten der kohlenstoffhaltigen Partikel, um eine erste Unterpartikelschicht (42a) zu erhalten, die sich auf dem ersten atmungsaktiven Polster (43) befindet;
Schritt 4: Bereitstellen einer kaminförmigen zweiten Form (400) und Platzieren derselben auf der ersten Unterpartikelschicht (42a), wobei die zweite Form (400) und die erste Unterpartikelschicht (42a) einen zweiten Formhohlraum (410) mit einer Öffnung ausbilden;
Schritt 5: Füllen des zweiten Formhohlraums (410) mit metall- oder legierungshaltigen Partikeln durch die Öffnung des zweiten Formhohlraums (410) und Verdichten der metall-oder legierungshaltigen Partikel, um eine erste Partikelschicht (41) zu erhalten, die sich auf der ersten Unterpartikelschicht (42a) befindet;
Schritt 6: Entfernen der zweiten Form (400) und Fortsetzen des Füllens des ersten Formhohlraums (310) mit den kohlenstoffhaltigen Partikeln durch die Öffnung des ersten Formhohlraums (310), und Verdichten der kohlenstoffhaltigen Partikel, um eine zweite Unterpartikelschicht (42b) zu erhalten, wobei die erste Unterpartikelschicht (42a) und die zweite Unterpartikelschicht (42b) eine zweite Partikelschicht (42) darstellen, die die erste Partikelschicht (41) umhüllt;
Schritt 7: Produzieren eines zweiten atmungsaktiven Polsters (43) und Platzieren des zweiten atmungsaktiven Polsters (43) in den ersten Formhohlraum (310) durch die Öffnung des ersten Formhohlraums (310), um die zweite Unterpartikelschicht (42b) abzudecken;
Schritt 8: Entfernen der ersten Form (300), um ein Behandlungselement mit Sandwichstruktur zu erhalten, und dieses als Element zur Behandlung von gefährlichen Substanzen in der Gasphase (40) zu verwenden.

11. Verfahren gemäß Anspruch 10, wobei das Verfahren nach dem Schritt 8 ferner Folgendes umfasst:
Bereitstellen eines Gehäuses (45), wobei mindestens eine Gehäusewand des Gehäuses (45) eine Atmungsöffnung (456) aufweist, wobei das Gehäuse (45) eine Bodenplatte (451), eine Deckplatte (452), eine Seitenplatte (453) und eine Ablenkplatte (454) umfasst, wobei die Bodenplatte (451), die Deckplatte (452) und die Seitenplatte (453) einen Hohlraum (455) mit einer in einer Seite definierten Öffnung ausbilden und die Ablenkplatte (454) die Öffnung des Hohlraums (455) verschließt;
Platzieren des erhaltenen Behandlungselements mit Sandwichstruktur in den Hohlraum (455);
Verschließen der Öffnung des Hohlraums (455) mit der Ablenkplatte (454), um das Element zur Behandlung von gefährlichen Substanzen in der Gasphase (40) zu erhalten.

12. Verfahren gemäß Anspruch 10 oder 11, wobei das Verfahren nach dem Schritt 8 ferner Folgendes umfasst:
Platzieren des erhaltenen Elements zur Behandlung von gefährlichen Substanzen in der Gasphase (40) in ein Beschichtungsmittel, das sich in einer flüssigen Phase befindet, wobei das Beschichtungsmittel eine Schmelztemperatur von nicht weniger als 46 Grad Celsius und nicht mehr als 58 Grad Celsius aufweist, oder wobei das Beschichtungsmittel eine Schmelztemperatur von nicht weniger als 70 Grad Celsius und nicht mehr als 78 Grad Celsius aufweist;
Entfernen des Elements zur Behandlung von gefährlichen Substanzen in der Gasphase (40) aus dem Beschichtungsmittel und Ausbilden einer Ummantelungsschicht (46) nach dem Abkühlen.

13. Verfahren gemäß Anspruch 10, wobei Schritt 4 Folgendes umfasst:
Schritt 4A, Bereitstellen einer kaminförmigen dritten Form (500) und Platzieren derselben auf die erste Unterpartikelschicht (42a), wobei die dritte Form (500) und die erste Unterpartikelschicht (42a) einen dritten Formhohlraum (510) mit einer Öffnung ausbilden;
Schritt 4B, Füllen des dritten Formhohlraums (510) mit Partikeln von Salzen durch die Öffnung des dritten Formhohlraums (510) und Verdichten der Partikel von Salzen, um eine dritte Unterpartikelschicht (47a) zu erhalten, die sich auf der ersten Teilpartikelschicht (42a) befindet;
Schritt 4C: Bereitstellen einer kaminförmigen zweiten Form (400) und Platzieren derselben auf die dritte Unterpartikelschicht (47a), wobei die zweite Form (400) und die dritte Unterpartikelschicht (47a) einen zweiten Formhohlraum (410) mit einer Öffnung ausbilden;
Schritt 6 umfasst Folgendes: Schritt 6A, Entfernen der zweiten Form (400) und Fortsetzen des Füllens des dritten Formhohlraums (510) mit den Partikeln von Salzen durch die Öffnung des dritten Formhohlraums (510), und Verdichten der Partikel von Salzen, um eine vierte Unterpartikelschicht zu erhalten, wobei die dritte Unterpartikelschicht (47a) und die vierte Unterpartikelschicht eine dritte Partikelschicht (47) darstellen, die die erste Partikelschicht (41) umhüllt;
Schritt 6B: Entfernen der dritten Form (500) und Fortsetzen des Füllens des ersten Formhohlraums (310) mit den kohlenstoffhaltigen Partikeln durch die Öffnung des ersten Formhohlraums (310), und Verdichten der kohlenstoffhaltigen Partikel, um eine zweite Unterpartikelschicht (42b) zu erhalten, und wobei die erste Unterpartikelschicht (42a) und die zweite Unterpartikelschicht (42b) eine zweite Partikelschicht (42) darstellen, die die dritte Partikelschicht (47) umhüllt.

14. Energiespeichervorrichtung, umfassend:
ein Gehäuse (10) umfassend einen Aufnahmehohlraum (11), der eine Öffnung aufweist;
eine Elektrodenanordnung (20), die in dem Aufnahmehohlraum (11) aufgenommen ist;
einen oberen Deckel (30), der die Öffnung des Aufnahmehohlraums (11) verschließt;
ein Element zur Behandlung von gefährlichen Substanzen in der Gasphase (40) gemäß einem der Ansprüche 1 bis 9, das sich innerhalb des Aufnahmehohlraums (11) befindet und zur Behandlung gefährlicher Gase innerhalb des Aufnahmehohlraums (11) dient.

15. Elektrische Ausrüstung, umfassend eine Energiespeichervorrichtung gemäß Anspruch 14, wobei die Energiespeichervorrichtung die elektrische Ausrüstung mit Strom versorgt.

## Revendications

1. Élément de traitement de substances dangereuses en phase gazeuse (40), comprenant:
une première couche de particules (41), comprenant des particules contenant du métal ou un alliage, les particules contenant du métal ou de type alliage traitant au moins l'un des gaz dangereux générés par un dispositif de stockage d'énergie ;
une deuxième couche de particules (42), enveloppant la première couche de particules (41) et comprenant des particules carbonées, les particules carbonées traitant au moins l'un des gaz dangereux ; et
un coussin respirant (43), disposé sur deux côtés de la deuxième couche de particules (42) dans un sens d'épaisseur de la deuxième couche de particules (42).

2. L'élément de traitement de substances dangereuses en phase gazeuse (40) selon la revendication 1, dans lequel l'élément de traitement de substances dangereuses en phase gazeuse (40) comprend en outre un boîtier (45), au moins une paroi du boîtier (45) comporte un trou d'aération (456) ;
le boîtier (45) comprend une plaque inférieure (451), une plaque supérieure (452), une plaque latérale (453) et un déflecteur (454), dans lequel la plaque inférieure (451), la plaque supérieure (452) et la plaque latérale (453) forment une cavité (455) avec une ouverture définie dans un côté, le déflecteur (454) recouvre l'ouverture de la cavité (455), et la première couche de particules (41), la deuxième couche de particules (42) et le coussin respirant (43) sont tous situés à l'intérieur de la cavité (455).

3. L'élément de traitement de substances dangereuses en phase gazeuse (40) selon la revendication 2, dans lequel la plaque inférieure (451), la plaque supérieure (452), la plaque latérale (453) et le déflecteur (454) comportent tous des trous de respiration (456).

4. L'élément de traitement de substances dangereuses en phase gazeuse (40) selon la revendication 1, dans lequel l'élément de traitement de substances dangereuses en phase gazeuse (40) comprend en outre une couche de revêtement (46), et la couche de revêtement (46) enveloppe la deuxième couche de particules (42) et le coussin respirant (43) ;
la couche de revêtement (46) a une température de fusion comprise entre 46 °C et 58 °C ; ou la couche de revêtement (46) a une température de fusion comprise entre 70 °C et 78 °C.

5. L'élément de traitement de substances dangereuses en phase gazeuse (40) selon la revendication 2 ou 3, dans lequel l'élément de traitement de substances dangereuses en phase gazeuse (40) comprend en outre une couche de revêtement (46), et la couche de revêtement (46) enveloppe le boîtier (45) ;
la couche de revêtement (46) a une température de fusion comprise entre 46 °C et 58 °C; ou la couche de revêtement (46) a une température de fusion comprise entre 70 °C et 78 °C.

6. L'élément de traitement de substances dangereuses en phase gazeuse (40) selon l'une quelconque des revendications 1 à 4, dans lequel l'élément de traitement de substances dangereuses en phase gazeuse (40) comprend en outre un élément de tension (44), et l'élément de tension (44) s'étend à travers la première couche de particules (41) et la deuxième couche de particules (42) dans un sens d'épaisseur de l'élément de traitement de substances dangereuses en phase gazeuse (40) ,
dans lequel, de préférence, l'élément de tension (44) est une fibre de carbone ou une fibre de verre.

7. L'élément de traitement de substances dangereuses en phase gazeuse (40) selon l'une quelconque des revendications 1 à 4, dans lequel une taille des particules contenant du métal ou un alliage n'est pas supérieure à 70 microns, et une taille des particules carbonées est supérieure à la taille des particules contenant du métal ou un alliage et n'est pas supérieure à 180 microns , ou
dans lequel un épaisseur de la première couche de particules (41) n'est pas inférieure à 100 microns et n'est pas supérieure à 180 microns , ou
dans lequel la deuxième couche de particules (42) a une épaisseur non inférieure à 200 microns et non supérieure à 400 microns sur un côté de la première couche de particules (41) le long d'une direction d'épaisseur de la première couche de particules (41).

8. Élément de traitement de substances dangereuses en phase gazeuse (40) selon l'une quelconque des revendications 1 à 4, dans lequel un épaisseur du coussin respirant (43) n'est pas inférieure à 500 microns et n'est pas supérieure à 1200 microns.

9. Élément de traitement de substances dangereuses en phase gazeuse (40) selon l'une quelconque des revendications 1 à 4, dans lequel l'élément de traitement de substances dangereuses en phase gazeuse (40) comprend en outre une troisième couche de particules (47) ;
la troisième couche de particules (47) est située entre la première couche de particules (41) et la deuxième couche de particules (42), la troisième couche de particules (47) comprend des particules de sels, et les particules de sels traitent au moins l'un des gaz dangereux,
dans lequel, de préférence, une taille des particules de sels est supérieure à une taille des particules de métal ou d'alliage et inférieure à une taille des particules carbonées.

10. Procédé de préparation d'un élément de traitement de substances dangereuses en phase gazeuse (40), pour préparer un élément de traitement de substances dangereuses en phase gazeuse (40) selon l'une quelconque des revendications 1 à 9, le procédé comprenant :
étape 1 consistant à fournir un premier moule en forme de cheminée (300) et à le placer sur une plaque de support (200), le premier moule (300) et une surface de la plaque de support (200) formant de manière coopérative une première cavité de moule (310) avec une ouverture;
étape 2, fabriquer un premier coussin respirant (43) et placer le premier coussin respirant (43) à un fond de la première cavité de moule (310) à travers l'ouverture de la première cavité de moule (310) ;
étape 3, remplir la première cavité de moule (310) avec des particules carbonées et compacter les particules carbonées pour obtenir une première couche de sous-particules (42a) disposée sur le premier coussin respirant (43) ;
étape 4, fournir un deuxième moule en forme de cheminée (400) et le placer sur la première couche de sous-particules (42a), le deuxième moule (400) et la première couche de sous-particules (42a) formant une deuxième cavité de moule (410) avec une ouverture ;
étape 5, remplir la deuxième cavité de moule (410) avec des particules contenant du métal ou un alliage à travers l'ouverture de la deuxième cavité de moule (410), et compacter les particules contenant du métal ou un alliage pour obtenir une première couche de particules (41) disposée sur la première couche de sous-particules (42a) ;
étape 6, retirer le deuxième moule (400) et continuer à remplir la première cavité de moule (310) avec les particules carbonées à travers l'ouverture de la première cavité de moule (310), et compactage des particules carbonées pour obtenir une deuxième sous-couche de particules (42b), la première sous-couche de particules (42a) et la deuxième sous-couche de particules (42b) constituant une deuxième couche de particules (42) enveloppant la première couche de particules (41) ;
étape 7, fabrication d'un deuxième coussin respirant (43) et placement du deuxième coussin respirant (43) dans la première cavité du moule (310) à travers l'ouverture de la première cavité du moule (310) pour recouvrir la deuxième couche de sous-particules (42b) ;
étape 8, retirer le premier moule (300) pour obtenir un élément de traitement à structure sandwich et l'utiliser comme élément de traitement de substances dangereuses en phase gazeuse (40).

11. Procédé selon la revendication 10, dans lequel, après l'étape 8, le procédé comprend en outre :
la fourniture d'un boîtier (45), au moins une paroi du boîtier (45) comportant un trou d'aération (456), le boîtier (45) comprenant une plaque inférieure (451), une plaque supérieure (452), une plaque latérale (453) et un déflecteur (454), dans lequel la plaque inférieure (451), la plaque supérieure (452) et la plaque latérale (453) formant une cavité (455) avec une ouverture définie dans un côté, et le déflecteur (454) recouvrant l'ouverture de la cavité (455);
placer l'élément de traitement à structure en sandwich obtenu dans la cavité (455) ;
sceller l'ouverture de la cavité (455) avec le déflecteur (454) pour obtenir l'élément de traitement de substances dangereuses en phase gazeuse (40).

12. Procédé selon la revendication 10 ou 11, dans lequel, après l'étape 8, le procédé comprend en outre :
placer l'élément de traitement de substances dangereuses en phase gazeuse (40) obtenu dans un agent de revêtement qui est en phase liquide, l'agent de revêtement ayant une température de fusion non inférieure à 46 degrés Celsius et non supérieure à 58 degrés Celsius, ou l'agent de revêtement ayant une température de fusion non inférieure à 70 degrés Celsius et non supérieure à 78 degrés Celsius ;
retirer l'élément de traitement de substances dangereuses en phase gazeuse (40) de l'agent de revêtement et former une couche de revêtement (46) après refroidissement.

13. Procédé selon la revendication 10, dans lequel l'étape 4 comprend :
étape 4A, consistant à fournir un troisième moule en forme de cheminée (500) et à le placer sur la première couche de sous-particules (42a), le troisième moule (500) et la première couche de sous-particules (42a) formant une troisième cavité de moule (510) avec une ouverture ;
étape 4B, consistant à remplir la troisième cavité de moule (510) avec des particules de sels à travers l'ouverture de la troisième cavité de moule (510), et à compacter les particules de sels pour obtenir une troisième couche de sous-particules (47a) disposée sur la première couche de sous-particules (42a) ;
étape 4C, fournir un deuxième moule en forme de cheminée (400) et le placer sur la troisième couche de sous-particules (47a), le deuxième moule (400) et la troisième couche de sous-particules (47a) formant une deuxième cavité de moule (410) avec une ouverture ;
l'étape 6 comprend: l'étape 6A, consistant à retirer le deuxième moule (400) et à continuer à remplir la troisième cavité de moule (510) avec les particules de sels à travers l'ouverture de la troisième cavité de moule (510), et le compactage des particules de sels pour obtenir une quatrième sous-couche de particules, la troisième sous-couche de particules (47a) et la quatrième sous-couche de particules constituant une troisième couche de particules (47) enveloppant la première couche de particules (41) ;
étape 6B, retirer le troisième moule (500) et continuer à remplir la première cavité de moule (310) avec les particules carbonées à travers l'ouverture de la première cavité de moule (310), et compactage des particules carbonées pour obtenir une deuxième sous-couche de particules (42b), la première sous-couche de particules (42a) et la deuxième sous-couche de particules (42b) constituant une deuxième couche de particules (42) enveloppant la troisième couche de particules (47).

14. Dispositif de stockage d'énergie, comprenant :
un boîtier (10), comprenant une cavité de logement (11) ayant une ouverture ;
un ensemble d'électrodes (20), logé dans la cavité de logement (11) ;
un couvercle supérieur (30) fermant hermétiquement l'ouverture de la cavité de logement (11) ;
un élément de traitement de substances dangereuses en phase gazeuse (40) selon l'une quelconque des revendications 1 à 9, disposé à l'intérieur de la cavité de logement (11) et destiné à traiter des gaz dangereux à l'intérieur de la cavité de logement (11).

15. Équipement électrique, comprenant un dispositif de stockage d'énergie selon la revendication 14, dans lequel le dispositif de stockage d'énergie alimente l'équipement électrique en énergie.
